# EUROPEAN PATENT APPLICATION

(11) **EP 3 563 730 A1**
(43) Date of publication of application: **06.11.2019**
(21) Application number: 18170293.7
(22) Date of filing: 01.05.2018
(51) Int. Cl.: A47J 31/38

(54) **COFFEE MACHINE**

(71) Applicant: Caffè A Mano GmbH, 85521 Ottobrunn (DE)
(72) Inventor: Widmer, Markus, 3600 Thun (CH); Liebe, Thomas, 3608 Thun (CH)
(74) Representative: Herrmann, Johanna

(57) **Abstract**

A coffee machine (1) comprises at least a cylinder (29) comprising a hollow space (30), a top flange element (40) and a bottom flange element (50). The hollow space (30) is delimited by the cylinder (29), the top flange element (40) and the bottom flange element (50). A piston (16) is movable in the hollow space (30) of the cylinder (29). The piston (16) comprises a first piston surface (33) and a second piston surface (34), whereby the first piston surface (33) is arranged opposite to the second piston surface (34). A first chamber (12) is defined in the hollow space (30) of the cylinder (29) extending from the first piston surface (33) to the top flange element (40) as well as a second chamber (17) is defined in the hollow space (30) of the cylinder (29) extending from the second piston surface (33) to the bottom flange element (50), wherein a spring element (25) is arranged in the first chamber (12) configured to act on the piston (16). A rod (22) is connected to the piston (16) and extends through the first chamber (12) to the top flange element (40). The top flange element (40) includes a bore (41) for guiding the rod (22). The rod (22) is movable together with the piston (16) by the operation of a lever (6) configured to move the rod (22) and the piston (16) relative to the cylinder (29). The cylinder (29) comprises a cylinder jacket (39). A heater (14) to heat the cylinder (29) and any fluid present in the hollow space (30) is arranged at or in proximity to the cylinder jacket (39).

## Description

### Background of the invention

The invention relates to a coffee machine. The present invention relates to a machine of the lever type for making coffee, for example espresso or similar coffees. The lever type coffee machine is operated manually and is advantageously equipped with a lever and a piston.

### Prior art

Many lever machines for the preparation of coffee are known. These types of lever coffee machines typically comprise of an external boiler in which water is heated to about 120°C to 130°C in order to produce steam. A pressure of about 2 bars to 3 bars absolute pressure is present in the boiler. The hot water is guided from the lower side of this boiler to a cylinder. In this cylinder a piston is blocking the flow of the hot water from the boiler into the cylinder. The piston is connected to at least one spring pushing this piston into a resting position. The piston is connected via a rod and a mechanism to a lever, for instance as shown in WO 2017/009186 A1. If the operator is pulling this lever downwardly by counterclockwise rotation of the lever, the piston moves upwardly. Thereby, the spring is compressed which increases the potential energy of the spring. After the piston has moved upwards for a certain distance, the openings in the cylinder wall are uncovered. The overpressure inside the boiler causes a flow of hot water from the boiler into the space between this piston and the ground coffee through the uncovered openings in the cylinder wall. After the operator has fully pulled this lever to its end position and released this lever, the energy accumulated in the spring is released and generates through the downward movement of the piston a pressure onto the hot water which is in the range of 6 to 10 bar. The pressurized hot water passes through the ground coffee to extract the coffee beverage. It is also known from WO2005079641 A1 to provide hot water from a boiler to a cylinder containing a movable piston. The movable piston is connected to a rod which can be actuated by a lever. If a user moves the lever downwardly, the rod and the piston are displaced downwardly whereby the hot water present in the cylinder is pressed out of the lower chamber of the cylinder into a conduit leading to a heat exchanger coil arranged in the boiler, heated to the desired temperature in the heat exchanger coil and passes from the heat exchanger coil to a conduit leading to a sieve tray container and pressed through ground coffee present in the respective sieve tray container.

### Problems of the prior art

The hot water delivered from the boiler of a lever type coffee machine needs to have a temperature of about 120°C to 130°C inside the boiler in order to generate sufficient pressure to be transported from the boiler into the cylinder. If the lever type coffee machine just has been started up, the cylinder, the piston as well as all conduits still are at room temperature. When the hot water from the boiler flows into the cylinder it cools down to significantly below 100°C. If the lever type coffee machine has been started up longer time ago and/or many coffees have already been prepared with the lever type coffee machine, the hot water from the boiler which flows into the cylinder cools down only slightly below 100°C. Due to the fact that the thermal losses of the lever type coffee machine depend on the operational state of the coffee machine, in particular its period of operation, an accurate temperature control for the hot water delivered to the ground coffee is impossible and therefore the quality of the brewed coffee varies, and in particular may not deliver a good quality coffee beverage if operated at a temperature which is either too low or too elevated for obtaining an optimal taste.

A further disadvantage of the lever type coffee machine according to the prior art resides in the presence of a spring, e.g. in WO 2017/009186 A1, whose force increases linearly with progressive displacement. The hot water at the beginning of the extraction phase exerts the highest pressure onto the ground coffee. The water pressure decreases until the end of the extraction. The pressure profile generated thus shows a decreasing pressure over the extraction time. A decreasing pressure onto the ground coffee may lead to a sub-optimal extraction curve and can result in bad quality coffee beverages.

A further disadvantage of the lever type coffee machine is the fact that when the lever is pulled to compress the spring, a substantial tensioning force acts on the lever. If the lever accidentally slips off the hand of the user, the lever can violently jump back into its resting position due to the energy stored in the compressed spring and the absence of any resistance. This whip-lash effect constitutes a risk of injury for the user.

It is therefore an object of the invention to provide a lever type coffee machine for making coffee beverages which provides a more accurate temperature control of the temperature of the hot water to be delivered to the ground coffee. It is a further object of the invention to provide means to control the flow of the hot water through the ground coffee, both in order to receive good and constant quality coffee beverages. It is a further object of the invention to prevent the abrupt return movement of the lever when released under certain conditions in order to ensure a safe operation for the user.

### Summary of the invention

The problem is solved by a coffee machine according to claim 1. Further advantageous embodiments of the coffee machine are subject to claims 2 to 15.

A coffee machine comprises at least a cylinder comprising a hollow space, a top flange element and a bottom flange element, whereby the hollow space is delimited by the cylinder, the top flange element and the bottom flange element, a piston movable in the hollow space of the cylinder. The piston comprises a first piston surface and a second piston surface, whereby the first piston surface is arranged opposite to the second piston surface. A first chamber is defined in the hollow space of the cylinder extending from the first piston surface to the top flange element. A second chamber is defined in the hollow space of the cylinder extending from the second piston surface to the bottom flange element, wherein a spring element is arranged in the first chamber configured to act on the piston, wherein a rod is connected to the piston and extends through the first chamber to the top flange element. The top flange element includes a bore for guiding the rod. The rod is movable together with the piston by the operation of a lever configured to move the rod and the piston relative to the cylinder. In other words, the first chamber on one side of the piston and the second chamber on the other side of the piston, whereby the one side of the piston is the side facing the top flange element and the other side of the piston is the side facing the bottom flange element. The spring element is configured to touch the one side of the piston and on the other side to the end piece of this cylinder and a top end of the hollow surface, which can be the side of the top flange element facing the one side of the piston. The cylinder comprises a cylinder jacket. A heater to heat the cylinder and any fluid present in the hollow space is arranged at or in proximity to the cylinder jacket.

A piston jacket can be arranged between the first and second piston surfaces. The piston jacket can comprise a circumferential seal in contact with the inner wall of the cylinder. The rod can in particular be parallel or even concentric with the longitudinal axis of the cylinder. The piston which is therefore in particular movable in axial direction within the cylinder.

According to an embodiment, the piston comprises a valve such that the first chamber is fluidly connectable to the second chamber such that a fluid can flow from the first chamber to the second chamber when the valve is in the open state. The valve can be configured in particular as a connecting valve.

According to an embodiment, the change of volume of the first chamber equals the change of volume of the second chamber upon displacement of the piston. If the piston is thus displaced in the direction of the bottom flange element when the lever is released by the user, the volume of the first chamber increases the same amount the volume of the second chamber decreases. If the piston is displaced in the direction of the top flange element when the lever is pulled downwardly by the user, the volume of the first chamber increases the same amount the volume of the second chamber decreases.

The lever can be rotatably mounted on the top flange element, whereby a center of rotation is provided in the top flange element or on the lateral side of the top flange element or the cylinder. The center of rotation can be configured as a pin element. The pin element can be received in the top flange element. The lever can be used to rotate about the center of rotation. A gear wheel can be attached to the pin element or the lever to be rotated therewith. The gear wheel can engage with a linear gear arranged on the rod. The rod and the piston can be moved in the hollow space of the cylinder when the gear wheel is actuated by a manipulation of the lever.

According to an embodiment, the coffee machine comprises a plurality of heaters to heat the cylinder and any fluid present in the hollow space. The heaters to heat the cylinder and any fluid present in the hollow space can be arranged at or in proximity to the cylinder jacket. The fluid can be in particular water, wherein in particular the water which is flowing in the first chamber is cold, cool or warm. Furthermore, a heater can be provided in the bottom flange element. Alternatively or additionally, a heater can be provided in the top flange element. The heater or any one of the plurality of heaters can comprise a plurality of heating zones. The heat supplied to each of the heating zones can be adjusted individually.

According to an embodiment, the coffee machine comprises an inlet valve arranged in the cylinder or the top flange element for allowing a fluid flow into the first chamber. In particular, the inlet valve can be a non-return valve. The inlet valve can be configured to be actuated by the lever. If the fluid is water, the water can be provided from a water tank or a water line to the first chamber of the cylinder if the inlet valve is in the open state.

According to an embodiment, the coffee machine comprises an air removal valve or an air release valve. In particular, the air removal valve is configured to be actuated by the lever.

The air removal valve can be arranged in the top flange element. The air removal valve or the air release valve can be configured as an air ventilation valve to control the air flow from the first chamber when the first chamber is filled with water.

According to an embodiment, the coffee machine comprises a control valve to control the flow of fluid from this said second chamber to the ground coffee. In particular, the control valve can be one of a manually or an electrically or hydraulically actuated control valve. A position detection element can be provided for detecting the position of the rod or the control valve.

According to an embodiment, the rod comprises a rod section extending into the second chamber and into a corresponding bore of the bottom flange element at least when the piston is in a position closest to the bottom flange element. According to an embodiment a portion of the rod section is received in the bore even if the piston is in the uppermost position. In other words, according to this embodiment the rod is guided in the bore for the entire displacement of the piston. The bore is advantageously in contact with the environment to ensure that no vacuum is generated when the piston and the rod section travel from the lowermost to the uppermost position by the manipulation of the lever from the resting position to the operation position. For this reason, an air vent can be provided in the bottom flange element for connecting the bore to the environment. Air can be sucked into the bore as soon as the rod section is about to be moved out of the bore and a cavity opens. A sealing element is provided in the bore to seal the cavity from the second chamber. The sealing element prevents an accidental air flow into the second chamber as well as an accidental water loss through the air vent. The sealing element is advantageously in fluid-tight contact with the rod, such that the rod is slidably received in the sealing element. In particular, the sealing element can be configured as a circumferential sealing element such as an O-ring.

Whenever the piston is set into motion the volume change of first chamber corresponds to the volume change of the second chamber according to an embodiment. In particular, the change of the volume of the first chamber equals the change of volume of the second chamber for any position of the piston in the cylinder.

Due to the fact that the rod section is provided, the first and second chambers are annular chambers. The cross-sectional surface of the first chamber corresponds to the cross-sectional surface of the second chamber. In particular, the cross-sectional surface of the first chamber is the same as the cross-sectional surface of the second chamber.

According to an embodiment, a position detection element can be connected to the rod, the cylinder or any bore configured to receive the rod.

According to an embodiment, the coffee machine comprises a processor unit to calculate desired extraction flow profiles to be displayed to the user or used to control the fluid flow onto the ground coffee by use of the valve.

A temperature sensor can be provided to measure the temperature in or on and close to the cylinder. A controller can be provided for controlling the temperature of the cylinder by reading the temperatures of the temperature sensor. The controller can be connected to the processor unit to calculate the required energy for the heater and control the heat supply to provide the appropriate energy to this heater. The heat supply can be configured as a current supply if the heater is configured as a resistance heater. The heat supply can be configured as a heating fluid supply in case the heater is configured as a fluid-fluid heat exchanger. The controller can comprise a temperature setting means to set the desired temperature of the cylinder.

According to an embodiment, the coffee machine can comprise a pressurized water supply. The water from the pressurized water supply can have a pressure of at least 5 bars, preferably at least 6 bars. According to this embodiment, the pressurized water present in the first chamber additionally assists to slow down the return movement of the released lever.

In operation water is supplied to the first chamber of the cylinder through the water inlet valve from a water reservoir or water tank or water line. After filling the first chamber with water, the water heated by the heater to the desired temperature. The temperature is measured by the temperature sensor. The temperature sensed by the temperature sensor is transmitted to the controller, compared to a set temperature in the processor unit and once the desired temperature is reached, a visual or audio signal is generated for the user to indicate that the brewing temperature for brewing the coffee beverage is reached.

The user actuates the lever, e.g. by pulling the lever in a downward direction, whereby the piston is moved towards the top flange element, such that the volume of the first chamber decreases and the volume of the second chamber increases. The water present in the first chamber is compressed, thereby a pressure difference is created, whereby the valve in the piston opens. The valve in the piston can be configured as a connecting valve as it allows the hot water to flow from the first chamber to the second chamber when the piston is moving towards the top flange element. The hot water can enter the second chamber and fill the additional volume of the second chamber generated by the upward movement of the piston.

When the second chamber is completely filled with hot water, the valve in the piston closes and the piston movement towards the top flange element is completed. After releasing the lever by the user and due to the force of the spring, the piston is moved towards the bottom flange element. Thereby the hot water in the second chamber gets pressurized or is further pressurized and upon reaching the desired overpressure, a release valve is opened by the user or by a drive unit to allow the pressurized hot water to flow into the recipient containing the ground coffee. The pressurized hot water passes through the ground coffee thereby brewing the coffee beverage. The coffee beverage passes through the snout of the recipient into the coffee cup. The recipient comprises a sieve element for retaining the ground coffee in the recipient and preventing the extraction of any coffee bean grains into the coffee beverage.

A pressure gauge can be provided to display the pressure of the pressurized hot water which is used to extract the coffee beverage from the ground coffee in a position between the release valve and the ground coffee.

A timer can be provided to show the extraction time to the user. An indicator can be provided which shows the flow rate or flow rate deviation to the user. The indicator can comprise a display.

An advantage of this invention is the improved temperature stability of the heated water of the lever type coffee machine due to the temperature-controlled cylinder in which the water is heated to the desired temperature as defined by the user through the means to set the desired temperature.

A further advantage is the improved flow control of the hot water through the ground coffee by the hot water release valve which allows the user to control the flow profile of the hot water through the ground coffee.

Further advantage is the reduced risk that the lever may jump violently back in its resting position by damping the movement of the water flow as long as both the first and the second chamber are always filled with water.

### Brief description of the drawings

A number of embodiments of the invention are shown in the subsequent drawings. It is shown in
Figure 1 an overall view of the present invention of a lever type coffee machine according to a first embodiment,
Figure 2 a cross-sectional view of the lever type coffee machine of Fig. 1,
Figure 3 a cross-sectional view of the lever type coffee machine of Fig. 1,
Figure 4 a partial cross-sectional view of the lever type coffee machine according to one of Fig. 1 to 3 with the lever in resting position showing the water inlet valve in open position,
Figure 5 a partial cross-sectional view of the lever type coffee machine of Fig. 4 with the lever in operation position showing the water inlet valve in closed position,
Figure 6 a partial cross-sectional view of the lever type coffee machine of Fig. 1 to 5 with the lever in resting position showing an air ventilation valve in open position,
Figure 7 a partial cross-sectional view of the lever type coffee machine of Fig. 6 with the lever in operation position showing the air ventilation valve in closed position,
Figure 8 a view of a lever type coffee machine according to a second embodiment in the operation position with the lever fully pulled down,
Figure 9 a cross-sectional view of the lever type coffee machine of Fig. 8 for a water supply line with the lever in resting position and the piston in the lowermost position,
Figure 10 a cross-sectional view of the lever type coffee machine of one of Fig. 8 or Fig. 9 in operation position with the lever fully pulled down and the piston in uppermost position,
Figure 11 a partial cross-sectional view of the lever type coffee machine of one of Fig. 9 or 10 with a water supply line with the lever in resting position,
Figure 12 a partial cross-sectional view of the lever type coffee machine of Fig. 11 with the lever in resting position showing the air ventilation valve in open position.

### Detailed description of the drawings

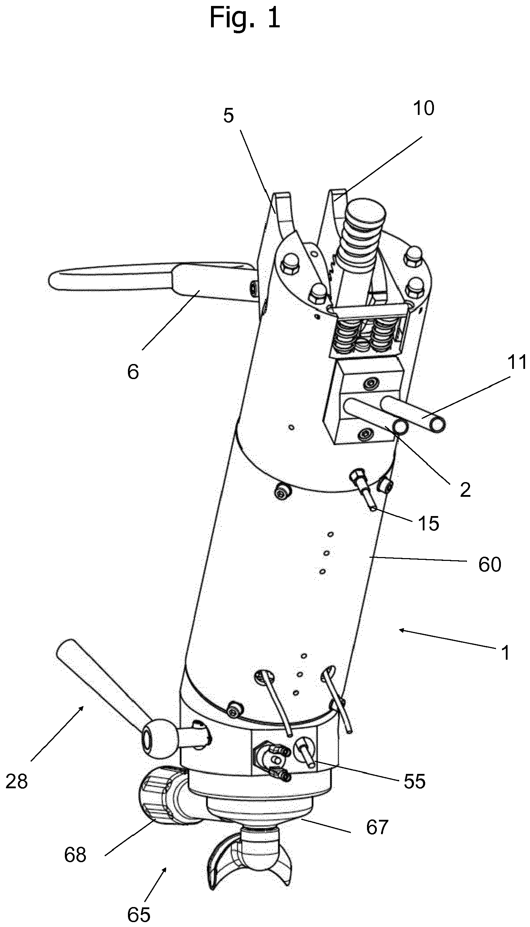

Figure 1 is an overall view of a lever type coffee machine 1 according to a first embodiment of the present invention in the operation position. The coffee machine 1 comprises a housing 60, a lever 6, a sieve holder 65. The housing contains a top flange element, a cylinder and a bottom flange element, which are not visible in Fig. 1 as they are arranged inside the housing 60. The coffee machine 1 further comprises a sieve holder 65 comprising a recipient 67 for receiving a sieve for ground coffee and a handle 68 for removably connecting the sieve holder 65 to the housing 60.

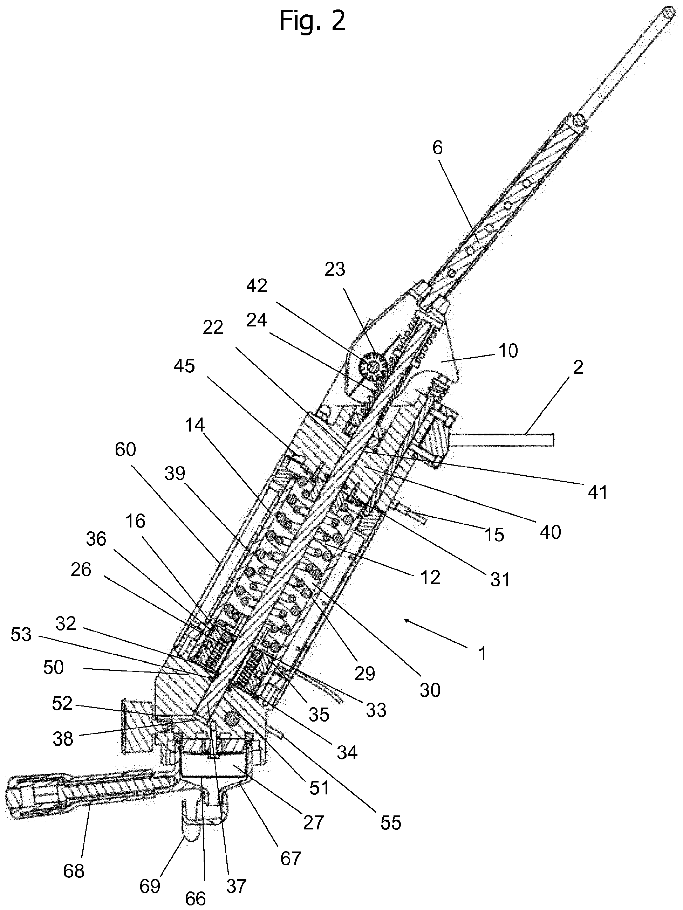

In Fig. 1 the lever 6 is shown in a fully pulled down position. This configuration is used for a setup with a water tank or a water line of low water supply pressure. The coffee machine 1 comprises a water supply 2 for the supply of water from a tank or a water line and an air removal line 11 for removing air from the hollow space arranged in the cylinder, as described in greater detail in connection with Fig. 2.

According to the embodiment of Fig. 1, the coffee machine 1 comprises a control valve 28 to control the flow of fluid from the second chamber 17 to the recipient 67 of the sieve holder 65. In particular, the control valve 28 can be one of a manually an electrically or hydraulically actuated control valve. The control valve can be operated by one of a DC engine, servo engine, stepper engine, hydraulic actuator, hydraulic engine. A position detection element can be provided for detecting the position of the control valve 28.

Fig. 2 shows a longitudinal sectional view through the lever type coffee machine 1 of Fig. 1. Said lever type coffee machine 1 comprises a cylinder 29, a top flange element 40 and a bottom flange element 50. The cylinder 29, the top flange element 40 and the bottom flange element 50 delimit a hollow space 30. A piston 16 is movable in axial direction in the hollow space 30 within the cylinder 29. The cylinder 29 thus comprises the hollow space 30 and the piston 16 is movable in the hollow space 30 from a bottom end 32 of the hollow space 30 towards a top end 31 of the hollow space 30. The bottom end 32 can be a part of the bottom flange element 50. The top end 31 can be a part of the top flange element 40. The piston 16 comprises a first piston surface 33 and a second piston surface 34. The first piston surface 33 is arranged opposite with respect to the second piston surface 34. A first chamber 12 is defined in the hollow space 30 of the cylinder 29 extending from the first piston surface 33 to the to the top end 31 of the hollow space 30 as well as a second chamber 17 is defined in the hollow space 30 of the cylinder 29 extending from the second piston surface 34 to the bottom end 32 of the hollow space 30. A spring element 25 is arranged in the first chamber configured to act on the piston 16, a rod 22 is connected to the piston 16 and extends through the first chamber 12 to the top end 31 or the top flange element 40. The spring element 25 can comprise a plurality of springs. The springs can be arranged concentrically with each other. The stiffness of each of the springs of the spring element can be different. In particular, the stiffness of a first spring can be different from the stiffness of a second spring forming the spring element according to the embodiment shown in Fig. 2. The top flange element 40 comprises a bore 41 for guiding the rod 22. The rod 22 is movable together with the piston 16 by the operation of a lever 6 configured to move the rod 22 and the piston 16 relative to the cylinder 29.

A piston jacket 35 can be arranged between the first and second piston surfaces 33, 34. The piston jacket 35 can comprise a circumferential seal 36 in contact with the inner wall of the cylinder. The rod 22 can in particular be parallel or even concentric with the longitudinal axis of the cylinder 29. The piston 16 is therefore in particular movable in axial direction within the cylinder 29.

According to the embodiment shown in Fig. 2, the piston 16 comprises a connecting valve 26 such that the first chamber 12 is fluidly connectable to the second chamber 17 such that a fluid can flow from the first chamber 12 to the second chamber 17 when the connecting valve 26 is in the open state.

The lever 6 can be rotatably mounted on the top flange element 40, whereby a center of rotation is provided in the top flange element 40. According to an embodiment not shown in the drawings the center of rotation can be on the circumference of the top flange element or the cylinder. The center of rotation can be configured as a pin element 42. The pin element 42 can be received in the top flange element 40. The lever 6 can be used to rotate about the center of rotation. A gear wheel 23 can be attached to the pin element 42 or the lever 6 to be rotated therewith. The gear wheel 23 can engage with a linear gear element 24 arranged on the rod 22. The rod 22 and the piston 16 can be moved in the hollow space 30 of the cylinder 29 when the gear wheel 23 is actuated by manipulation of the lever 6.

The coffee machine 1 according to Fig. 2 comprises a heater 14 to heat the cylinder 29 and any fluid present in the hollow space 30. The fluid can be in particular water. In particular the water which is flowing into the first chamber 12 is cold. The heater 14 is arranged inside, at or in proximity to the cylinder jacket 39. The heater 14 can comprise a circumferential heating surface connected to one of the outer or inner walls of the cylinder jacket 39. The circumferential heating surface can comprise one of an electrical resistance or can be configured to be exposed to a heating fluid. In particular, the heater 14 can be integrated into the cylinder jacket 39 of the cylinder 29 or into the cylinder 29. In particular the heater 14 can be configured as a resistance heater. Alternatively or additionally, the heater 14 comprises a fluid passage for contacting the outer cylinder wall with a heating fluid. If the heater 14 is configured as an electrical resistance heater, the current can be easily supplied from the mains. The coffee machine 1 can be operated in any location which has access to the mains. If a heating fluid is supplied to the heater, the coffee machine can be operated in any location without access to the mains. In addition, for a coffee machine 1, which is heated by a heating fluid may not be subject to the same special safety requirements which have to be taken in consideration to prevent any electric shock or explosion.

The rod 22 comprises a rod section 37 extending into the second chamber 17 and into a corresponding bore 51 of the bottom flange element 50 at least when the piston 16 is in a position closest to the bottom flange element 50, thus closest to the bottom end 32. If an air vent 51 is provided in the bottom flange element 50, which is connected to the bore 51, a sealing element 53 is provided to seal the second chamber 17 from the bore 51. The bore 51 can be filled with air via the air vent 52. The sealing element 53 prevents an accidental air flow into the second chamber 17 as well as an accidental water flow into the bore 51 or even a water loss through the air vent 52. The sealing element is advantageously received in a circumferential groove of the bottom flange element 50 and is advantageously in fluid-tight contact with the rod 22, such that the rod 22 is slidably received in the sealing element 53. In particular, the sealing element 53 can be configured as a circumferential sealing element such as an O-ring.

Therefrom, an equivalent volume change of first chamber 12 and the second chamber 17 can be obtained whenever the piston 16 is moved. Whenever the piston 16 is set into motion the volume change of first chamber 12 corresponds to the volume change of the second chamber 17. In particular, the change of the volume of the first chamber 12 equals the change of volume of the second chamber 17 for any position of the piston 16 in the cylinder 29. According to an embodiment, a position detection element 38 can be connected to the rod 22 the cylinder 29 or any bore configured to receive the rod 22, such as one of the bores 41, 51.

According to an embodiment, the coffee machine 1 comprises a processor unit to calculate desired extraction flow profiles. The extraction flow profiles can be displayed to the user or used to control the fluid flow onto the ground coffee by controlling the opening and closing the control valve 28 (see Fig. 1) by a drive unit. Alternatively or additionally, the control valve can be operated manually. The user can be guided by an indicator, e.g. a display which can indicate one of the desired extraction flow profile or the actual flow profile. In particular the indicator can assist the user to operate the control valve 28 to best match the desired extraction profile with the actual flow profile. Alternatively the desired extraction flow profile can be compared to the actual flow profile by a comparator which can send a control signal to the drive unit of the control valve to change the flow cross-section of the control valve to automatically adjust the flow in such a way the actual flow profile matches the desired extraction flow profile.

A temperature sensor 55 can be provided to measure the temperature in or close to the cylinder. The temperature sensor 55 can be provided on the top surface of the bottom flange element 50 or in one of the walls of the second chamber 17 or in the water in the second chamber. A controller (not shown) can be provided for controlling the temperature of the cylinder 29 by reading the temperatures of the temperature sensor 55 intermittently or continuously. The controller can be connected to the processor unit to calculate the required energy for the heater 14 and control the heat supply to provide the appropriate energy to the heater 14. The heat supply can be configured as a current supply if the heater 14 is configured as a resistance heater. The heat supply can be configured as a heating fluid supply in case the heater 14 is configured as a fluid-fluid heat exchanger.

The controller can comprise a temperature setting means to set the desired temperature of the cylinder 29. The controller can operate a control element to control the heat supply to the heater 14.

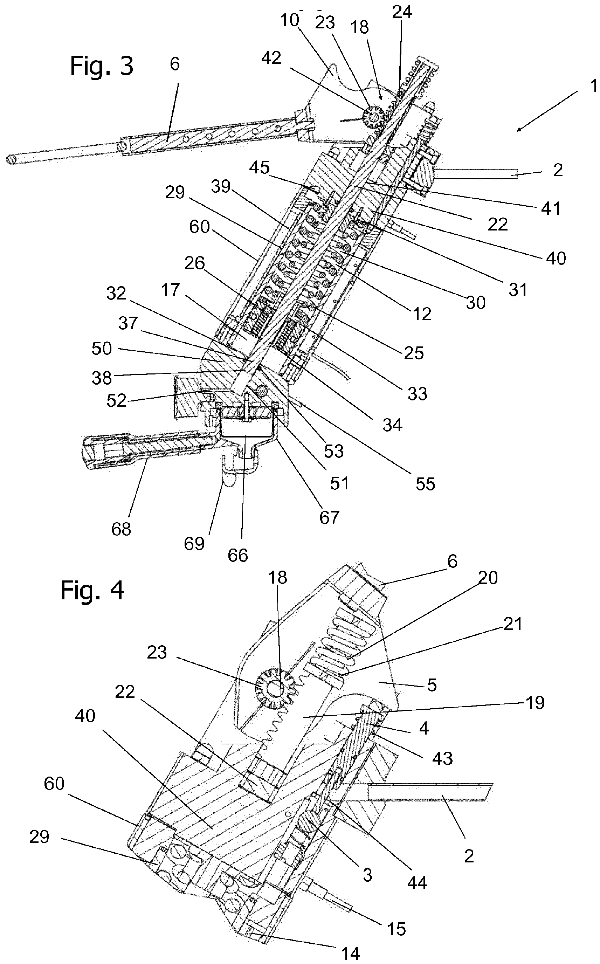

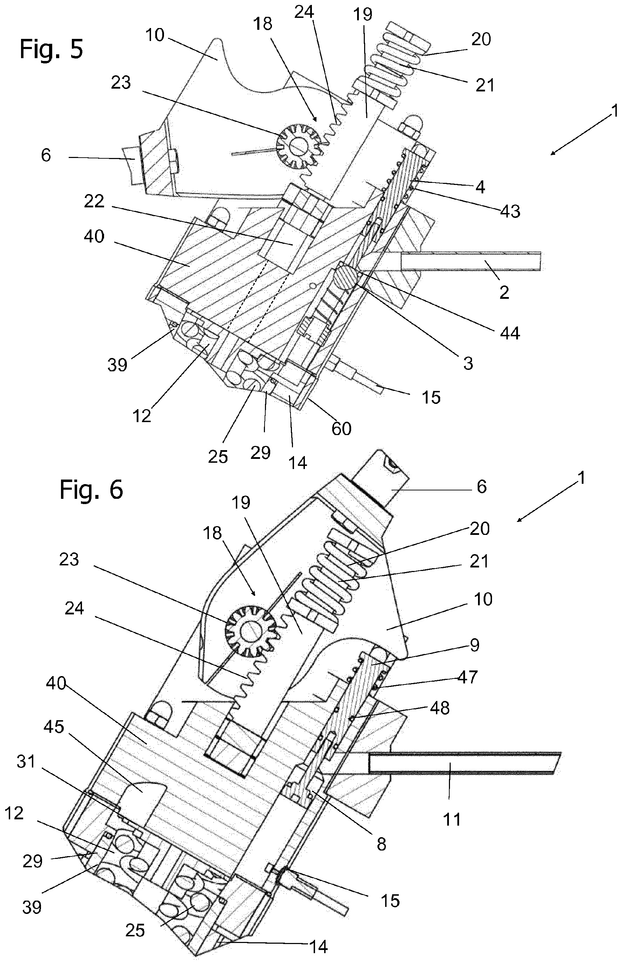

In operation, water is supplied to the first chamber 12 of the cylinder 29 by a water supply 2 containing a water inlet valve 3 from a water reservoir or water tank or water line as shown in Fig. 4. An air removal valve 8 (see Fig. 6) can be used to control the air ventilation from this first chamber 12. After filling the first chamber 12 with water, the water temperature in the first chamber 12 is measured by a temperature sensor 15. The temperature detected by the temperature sensor 15 is transmitted to the controller and in a comparing unit of the controller, the temperature of the water is compared to the reference temperature, that means the desired temperature of the water in the first chamber 12. If the temperature of the water is below the desired temperature, the heater 14 is turned on and the water is heated by the heater 14 to the desired temperature. Once the desired temperature is reached, a visual or audio signal can be generated for the user to indicate that the brewing temperature for brewing the coffee beverage is reached. The user can manipulate the lever 6 from the resting position as shown in Fig. 2 to the operation position as shown in Fig. 3.

By manipulating the lever 6, the gear wheel 23, which is fixedly connected to the lever 6, is rotated. The gears of the gear wheel 23 engage with the linear gear element 24, which is provided on the rod 22. By the rotational movement of the gear wheel 23 a translational movement of the rod 22 is obtained as the rotation of the lever 6 and the corresponding gear wheel 23 can be transformed into a linear movement of the rod 22. When the lever 6 is moved from the resting position to the operation position, the rod 22 is moved upwardly. The piston 16 moves together with the rod 22 in upward direction according to the representation of Fig. 2. The piston 16 moves thus towards the top end 31 of the hollow space 30. The spring element 25 which is arranged in the first chamber 12, thus between the first piston surface 33 and the top end 31, is thereby compressed. As the inlet valve 3 is closed, the pressure of the hot water present in the first chamber increases. A connecting valve 26 is provided on the piston 16 allowing the hot water to flow from the first chamber 12 to the second chamber 17 when the chamber volume of the first chamber 12 is reduced due to the movement of the piston 16 in the direction towards the top end 31. The volume of the second chamber 17 increases and the second chamber 17 is filled with the hot water from the first chamber 12 until the lever 6 has reached its operation position as shown in Fig. 3. Upon displacement of the piston 16, the change of volume of the first chamber 12 equals the change of volume of the second chamber 17.

The temperature sensor 55 senses the water temperature in the second chamber 17. The temperature value can be fed into a control unit to monitor or control the temperature of the water in the second chamber 17. In particular the control unit can change the heat supply to adjust the temperature to a desired temperature.

Figure 3 shows a cross-sectional view of the lever type coffee machine 1 of Fig. 1 or Fig. 2. Fig. 3 shows the position of the lever 6 in the operation position. The piston 16 has reached the position closest to the top end 31 and the volume of the first chamber 12 has thus reached its minimal value. The spring element 25 has reached the state of its maximum compression. Thus, the maximum potential energy is stored in the spring element 25 in the position as shown in Fig. 3. The second chamber 17 has the maximum volume in this position. The second chamber 17 is filled with hot water. The temperature of the hot water in the second chamber 17 can be continuously controlled by the temperature sensor 55. The connecting valve 26 is closed and the coffee machine is in this state ready for the preparation of the coffee beverage.

The rod 22 extends through the second chamber 17 and is still partially received in the bore 51 of the bottom flange element 50. Thus, a portion of the rod section 37 still extends into the second chamber 17 and into a corresponding bore 51 of the bottom flange element 50 at least when the piston 16 is in a position closest to the top flange element 40. The rod section 37 can thereby guide the rod 22 and the piston 16 in the cylinder 29 more precisely. In addition, vacuum conditions can be avoided if the rod section 37 is provided as the volume change of the second chamber 17 corresponds to the volume change of the first chamber 12 during the upward movement of the piston 16.

In order to start the preparation of the coffee beverage, the user releases the lever 6 so that the lever moves from the operation position to the resting position by the release of the spring force by the expansion of the spring element 25. The piston 16 can move downwardly, thus in the direction towards the bottom end 32 of the hollow space 30. As the spring element 25 can expand, its potential energy can be released and exert a pressure upon the piston 16, to push the piston 16 towards the bottom end 32, thus towards the bottom flange element 50. Any pressure from water line can be used to assist the movement of the piston 16 to pressurize the hot water in the second chamber 17 to the required pressure for passing through the ground coffee 27. The hot water present in the second chamber 17 is pressurized as the connecting valve 26 remains closed. At the same time the fluid pressure in the first chamber 12 is reduced. The inlet valve 3 can open and cold or warm water can be supplied to the first chamber 12 again.

If the pressure of the water in the second chamber 17 has reached the desired value, the control valve 28 (see Fig. 1) can be opened either by manual operation or automatically and the pressurized hot water can enter the recipient 67 containing the ground coffee 27, pass through the ground coffee 27 and through the sieve 66 to be dispensed through the spout 69 into a cup or other suitable beverage container for receiving the hot coffee beverage.

A pressure gauge can be provided for showing or monitoring the pressure of the hot pressurized water passing through the ground coffee 27.

Figure 4 is a partial cross-sectional view of the lever type coffee machine 1 according to the embodiment shown in the previous Figures. According to the embodiment shown in Fig. 4, the coffee machine 1 comprises an inlet valve 3 arranged in the cylinder 29 or the top flange element 40 for allowing a fluid flow into the first chamber 12. In particular, the inlet valve 3 can be a non-return valve. The inlet valve 3 can be configured to be actuated by the lever 6. If the fluid is water, the water can be provided from a water tank or a water line to the first chamber 12 of the cylinder 29 if the inlet valve 3 is in the open state. This coffee machine 1 can be connected to a water tank (not shown) or a water line 2. The lever 6 is in resting position and the water inlet valve 3 is shown in an open position.

If the water line 2 is connected to a water tank or a water line of low pressure the water inlet valve 3 is opened by a plunger 4 which is pushed by a cam 5 as long as the lever 6 remains in its resting position. If the water line 2 is connected to a tank or a water line with sufficient pressure the water inlet valve 3 can be of a type non-return valve and can be opened directly by the applied water pressure from the tank or the water line. The water then flows into the first chamber 12.

In the resting position of the lever 6 as shown in Fig. 2 or Fig. 4 the piston 16 is in the position in which the first chamber 12 has the maximum volume and the second chamber 17 has the minimum volume. The second piston surface 34 can be in contact with the bottom end 32 of the hollow space 30 as shown in Fig. 2. In this configuration, the volume of the second chamber 17 can be reduced to zero if the surface of the second piston surface 34 matches the surface of the bottom end 32.

If the water supply 2 is connected to a water tank or a water line with low pressure the lever 6 is connected via gear means 18, e.g. gear wheel 23, to a linear shifter 19 compressing a first spring 20 until the linear shifter 19 is stopped at the end face 21 of the rod 22. During a movement of the lever 6 away from its resting position the rod 22 initially remains in its resting position and the water inlet valve 3 kept in an open position by a plunger 4. When the lever 6 is about to be moved from the resting position to the operation position, the plunger 4 is released by a cam 5. The linear shifter 19 is driven towards the end face 21 of rod 22 when the lever 6 is about to be moved from the resting position to the operation position. During this stage, the cam 5 performs a rotational movement. The plunger 4 is moved upwardly in Fig. 4 as the spring element 43 is released. At the same time the ball of the water inlet valve 3 is moved upwardly and closes the fluid connection to the water supply 2 as soon as the ball reaches the valve seat 44.

If the lever 6 is moved away further from its resting position, the rod 22 and the piston 16 are moved toward the top end 31 and the volume of the first chamber 12 is reduced and the volume of the second chamber 17 is increased as shown in Fig. 3. In addition, the cam 5 is moved away from the plunger 4 such that the spring element 43 can be entirely released.

Figure 5 is a partial cross-sectional view of the lever type coffee machine 1 according to the embodiment shown in the previous Figures. According to the embodiment shown in Fig. 5, upper flange element 40 of the coffee machine 1 is shown in greater detail in a section showing the water line 2 to the first chamber 12 of the cylinder 29 for a setup with water tank or with a low-pressure water line with the lever 6 in operation position showing the water inlet valve 3 in closed position.

Figure 6 is a partial cross-sectional view of the lever type coffee machine 1 according to the embodiment shown in the previous Figures. According to the embodiment shown in Fig. 6, upper flange element 40 of the coffee machine 1 is shown in greater detail in a section showing the air removal from the first chamber 12 of the cylinder 29. According to Fig. 6, the coffee machine 1 comprises an air removal valve 8. In particular, the air removal valve 8 is configured to be actuated by the lever 6. The air removal valve 8 can be arranged in the top flange element 40. The air removal valve 8 can be configured as an air ventilation valve to control the air flow from the first chamber 12 when the first chamber 12 is about to be filled with water. If the water line 2 is connected to a water tank and inside the first chamber 12 air or any other gas accumulates, this air or gas is removed through the air removal valve 8 which is opened by a plunger 9 and which is pushed by a cam 10. If a plunger 9 activated air removal valve 8 is available as shown in Fig. 6, the air removal valve 8 is closed by releasing the plunger 9 when the cam 10 separates from the plunger 9 as the cam 10 is moved away from the plunger 9 when the lever 6 is moved from the resting position into the operation position. A spring element 47 can be provided on the plunger having a first end resting on a shoulder of the plunger and a second end resting on the surface of the top flange element 40. The bore 48 is configured to receive the plunger 9 and the air removal valve 8 connected to the plunger 9.

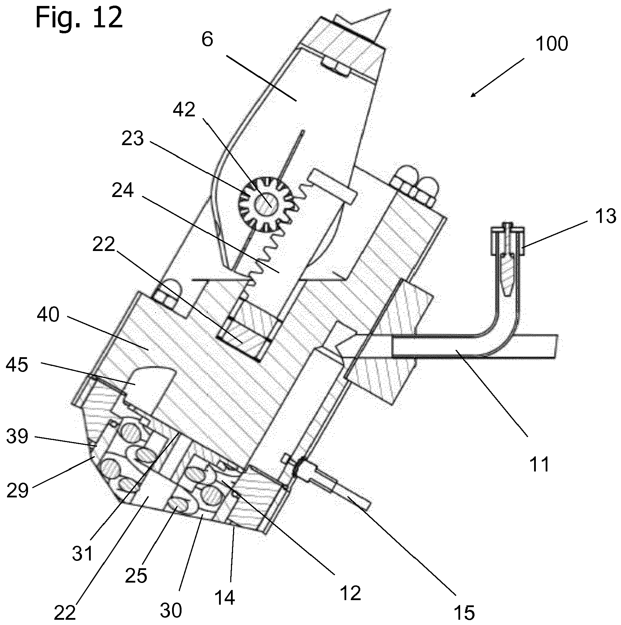

If the air removal valve 8 is open as shown in Fig. 6, the air flows out of the first chamber 12 through the air removal line 11 into the water tank or any other water container. If the water supply 2 is connected to a tank or a water line, the air or gas from the first chamber 12 also can be removed through the air removal line 11 to an air or gas release valve 13 as shown in Fig. 12. An air removal valve 8 is not necessary in this configuration.

The water inside the first chamber 12 according to one of Fig. 1 to 6 can be heated to the desired temperature by a heater 14. This heater 14 can be one of an electrical or fluid heater. A temperature sensor 15 can be provided to measure the temperature of the water inside or at the wall of the first chamber 12. The temperature sensor output can be used to generate temperature data which can be used as a basis to calculate the control profile for the heater 14. A further temperature sensor 55 can be used to measure the water temperature inside or at the wall of the second chamber 17 and/or a temperature sensor close to the heater / heaters can be used to measure the temperature and corresponding transducers to generate temperature data. The temperature data can be used as parameters to calculate a control profile for the heater 14.

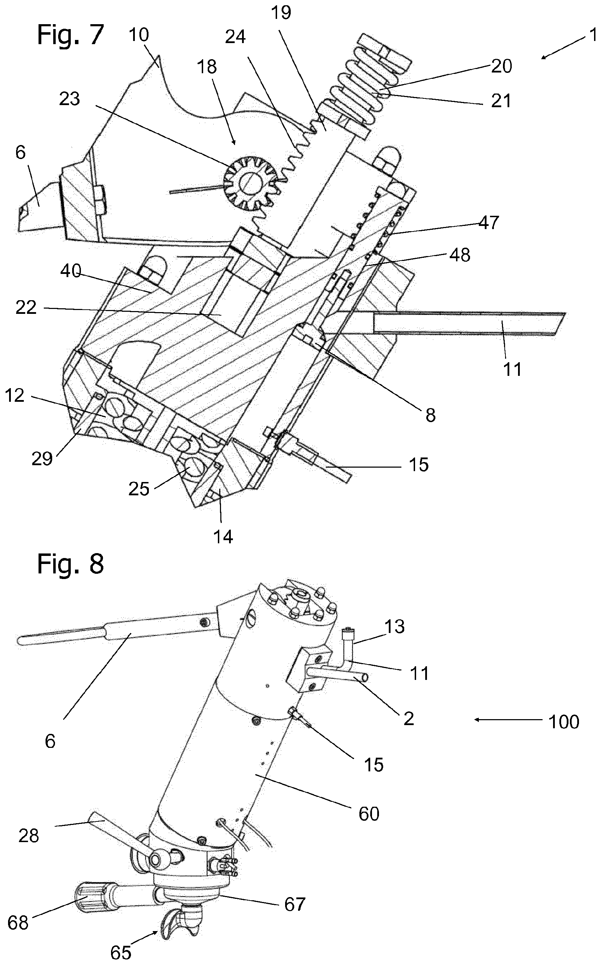

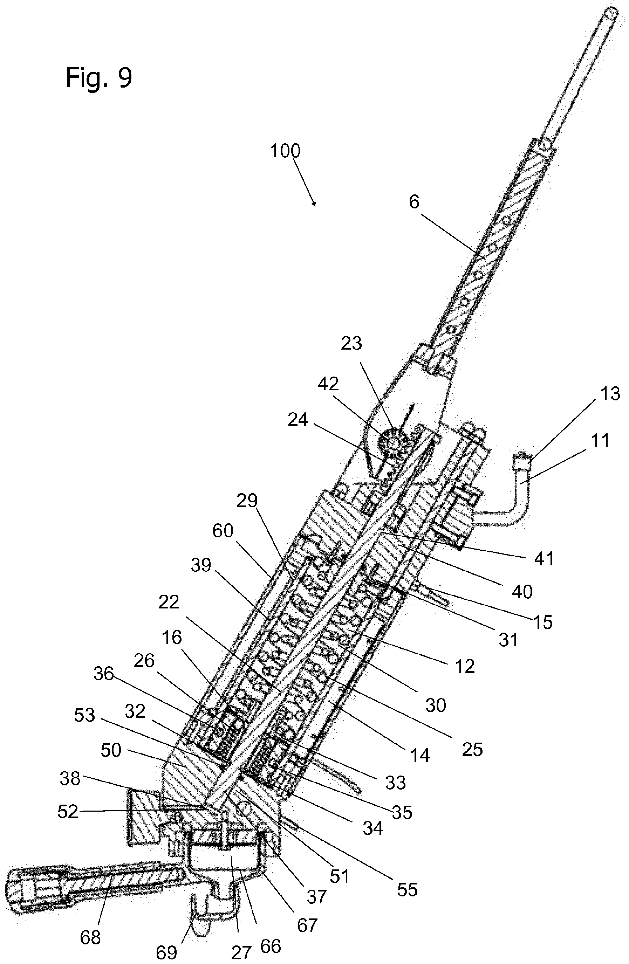

Figure 8 is a view of a lever type coffee machine 100 according to a second embodiment of the invention in the operation position with the lever fully pulled down. This configuration is for a setup with a water supply line connection with sufficient line pressure. The coffee machine 100 comprises a water supply 2 for the supply of water from a tank or a water line and an air removal line 11 for removing air from the hollow space arranged in the cylinder, as described in greater detail in connection with Fig. 9. The air removal line 11 can comprise a gas release valve 13.

According to the embodiment of Fig. 8, the coffee machine 100 comprises a control valve 28 to control the flow of fluid from the second chamber 17 (see Fig. 9) to the recipient 67 of the sieve holder 65. In particular, the control valve 28 can be one of a manually, an electrically or hydraulically actuated control valve. A position detection element can be provided for detecting the position of the control valve 28.

Figure 9 shows a cross-sectional view of the lever type coffee machine 100 of Fig. 8 for a water supply line with the lever 6 in resting position. The water supply 2 is not shown in Fig. 9 as it is positioned before the plane of the drawing. The piston 16 is shown in its lowermost position. The lever type coffee machine 100 comprises a cylinder 29, a top flange element 40 and a bottom flange element 50. The cylinder 29, the top flange element 40 and the bottom flange element 50 delimit a hollow space 30. A piston 16 is movable in axial direction in the hollow space 30 within the cylinder 29. The cylinder 29 thus comprises the hollow space 30. The piston 16 is movable in the hollow space 30 from a bottom end 32 of the hollow space 30 towards a top end 31 of the hollow space 30. The bottom end 32 can be a part of the bottom flange element 50. The top end 31 can be a part of the top flange element 40. The piston 16 comprises a first piston surface 33 and a second piston surface 34. The first piston surface 33 is arranged opposite with respect to the second piston surface 34. A first chamber 12 is defined in the hollow space 30 of the cylinder 29 extending from the first piston surface 33 to the to the top end 31 of the hollow space 30 and a second chamber 17 is defined in the hollow space 30 of the cylinder 29 extending from the second piston surface 34 to the bottom end 32 of the hollow space 30. A spring element 25 is arranged in the first chamber 12 configured to act on the piston 16. The spring element 25 can comprise a plurality of springs. The springs can be arranged concentrically with respect to each other. The stiffness of each of the springs of the spring element can vary with respect to each of the other springs forming the spring element. A rod 22 is connected to the piston 16 and extends through the first chamber 12 to the top end 31 or the top flange element 40. The rod 22 can be arranged inside the spring element 25. The spring element 25 can comprise a plurality of coil springs, such as shown in Fig. 9. The top flange element 40 comprises a bore 41 for guiding the rod 22. The rod 22 is movable together with the piston 16 by the operation of a lever 6 configured to move the rod 22 and the piston 16 relative to the cylinder 29.

A piston jacket 35 can be arranged between the first and second piston surfaces 33, 34. The piston jacket 35 can comprise a circumferential seal 36 in contact with the inner wall of the cylinder 29. The rod 22 can in particular be parallel or even concentric with the longitudinal axis of the cylinder 29. The piston 16 is therefore in particular movable in axial direction within the cylinder 29.

According to the embodiment shown in Fig. 9, the piston 16 comprises a connecting valve 26 such that the first chamber 12 is fluidly connectable to the second chamber 17 such that a fluid can flow from the first chamber 12 to the second chamber 17 when the connecting valve 26 is in the open state.

The lever 6 can be rotatably mounted on the top flange element 40, whereby a center of rotation is provided in the top flange element 40. According to an embodiment not shown in the drawings the center of rotation can be on the circumference of the top flange element or the cylinder. The center of rotation can be configured as a pin element 42. The pin element 42 can be received in the top flange element 40. The lever 6 can be used to rotate about the center of rotation. A gear wheel 23 can be attached to the pin element 42 or the lever 6 to be rotated therewith. The gear wheel 23 can engage with a linear gear element 24 arranged on the rod 22. The rod 22 and the piston 16 can be moved in the hollow space 30 of the cylinder 29 when the gear wheel 23 is actuated by manipulation of the lever 6. According to this embodiment, any movement of the lever from the resting position to the operation position results in a corresponding movement of the rod 22. The linear gear element 24 can be attached to the rod in a fixed position, such that any relative movement of the linear gear element 24 with respect to the rod 22 can be avoided.

The coffee machine 100 according to Fig. 9 comprises a heater 14 to heat the cylinder 29 and any fluid present in the hollow space 30. The fluid can be in particular water. In particular the water which is flowing into the first chamber 12 is cold. The heater 14 is arranged at or in proximity to the cylinder jacket 39. The heater 14 can comprise a circumferential heating surface connected to one of the outer or inner walls of the cylinder jacket 39. The circumferential heating surface can comprise one of an electrical resistance or can be configured to be exposed to a heating fluid. In particular, the heater 14 can be integrated into the cylinder jacket 39 of the cylinder 29. In particular the heater 14 can be configured as a resistance heater. Alternatively or additionally, the heater 14 comprises a fluid passage for contacting the outer cylinder wall with a heating fluid. If the heater 14 is configured as an electrical resistance heater, the current can be easily supplied from the mains. The coffee machine 100 can be operated in any location which has access to the mains. If a heating fluid is supplied to the heater, the coffee machine can be operated in any location without access to the mains. In addition, for a coffee machine 100, which is heated by a heating fluid may not be subject to the same special safety requirements which have to be taken in consideration to prevent any electric shock or explosion.

The rod 22 comprises a rod section 37 extending into the second chamber 17 and into a corresponding bore 51 of the bottom flange element 50 at least when the piston 16 is in a position closest to the bottom flange element 50, thus closest to the bottom end 32. If an air vent 51 is provided in the bottom flange element 50, which is connected to the bore 51, a sealing element 53 is provided to seal the second chamber 17 from the bore 51. The bore 51 can be filled with air via the air vent 52. The sealing element 53 prevents an accidental air flow into the second chamber 17 as well as an accidental water flow into the bore 51 or even a water loss through the air vent 52. The sealing element is advantageously received in a circumferential groove of the bottom flange element 50 and is advantageously in fluid-tight contact with the rod 22, such that the rod 22 is slidably received in the sealing element 53. In particular, the sealing element 53 can be configured as a circumferential sealing element such as an O-ring.

Therefrom, an equivalent volume change of first chamber 12 and the second chamber 17 can be obtained whenever the piston 16 is moved. Whenever the piston 16 is set into motion the volume change of first chamber 12 corresponds to the volume change of the second chamber 17. In particular, the change of the volume of the first chamber 12 equals the change of volume of the second chamber 17 for any position of the piston 16 in the cylinder 29. According to an embodiment, a position detection element 38 can be connected to the rod 22 the cylinder 29 or any bore configured to receive the rod 22, such as one of the bores 41, 51.

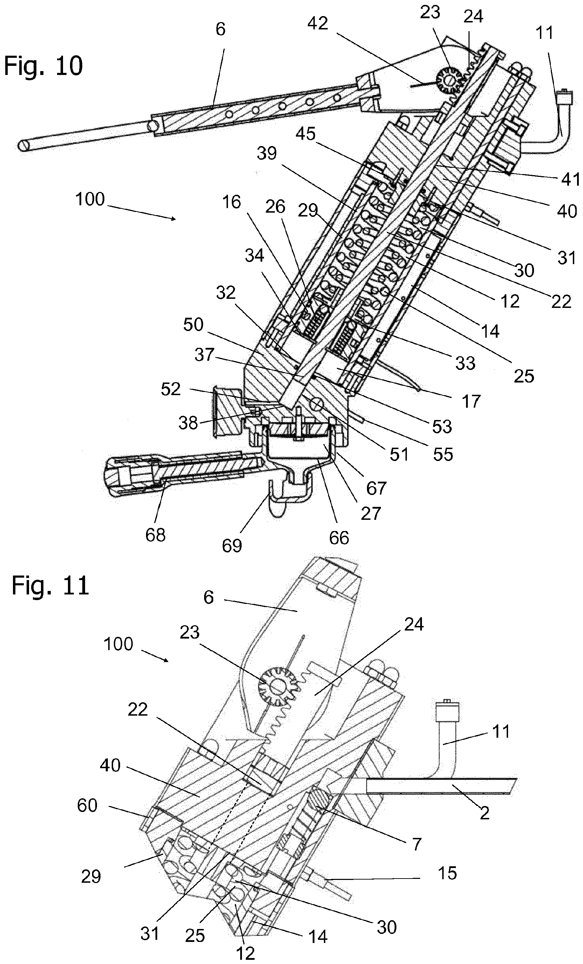

If the water supply 2 is connected to a tank or a water line and no plunger activated valves are available, the lever 6 is connected via gear wheel 23 to a linear gear element 24 which is directly connected to the rod 22. If the lever 6 is moved away from its resting position, the rod 22 and the piston 16 are moved in the direction of the top flange element 40. In Fig. 9 and Fig. 10 this movement occurs in upward direction. The volume of the first chamber 12 is reduced and the volume of the second chamber 17 is increased.

During the move of the piston 16, the spring element 25 is compressed and the water in the first chamber 12 is released into the second chamber 17 by opening the connecting valve 26. If the lever 6 is released, the spring element 25 pushes the piston 16 towards the second chamber 17. In particular the water supply 2 can be configured as a pressurized water supply 2. The water from the pressurized water supply 2 can have a pressure of at least 5 bars, preferably at least 6 bars. According to this embodiment, the pressurized water in the first chamber 12 additionally assists to slow down the return movement of the released lever 6. The connecting valve 26 closes and the water in the second chamber 17 is pressed onto the ground coffee 27. At the same time, the increasing volume of the first chamber 12 is filled with water from the tank or water line.

Between the second chamber 17 and the ground coffee 27 an optional manually operated control valve 28 can limit the flow from the second chamber 17 to the ground coffee 27. By this optional control valve 28 the hot pressurized water flow rate through the ground coffee 27 and the hot pressurized water pressure onto the ground coffee can be adjusted for the entire extraction process. A further advantage of the control valve 28 is that the water in the second chamber 17 doesn't flow out instantly if no ground coffee 27 is present on the sieve 66 in the recipient 67. The control valve 28 thus operates as a restriction passage configured to delay the hot pressurized water discharge, which ensures that the hot pressurized water is discharged slowly from the second chamber 17. The spring element 25 therefore also expands slowly, which ensures that the lever 6 doesn't quickly jump up to its resting position. The slow return movement of the lever 6 most likely causes no harm to the user.

Figure 10 is a cross-sectional view of the lever type coffee machine 100 of Fig. 8 or Fig. 9 for a setup with a water supply line in operation position with the lever fully pulled down and the piston 16 in the uppermost position. Fig. 10 shows the position of the lever 6 in the operation position. The piston 16 has reached the position closest to the top end 31 and the volume of the first chamber 12 has thus reached its minimum value. The spring element 25 has reached the state of its maximum compression. Thus, the maximal potential energy is stored in the spring element 25 in the position as shown in Fig. 3. The second chamber 17 has in this position the maximum volume. The second chamber 17 is filled with hot water.

The temperature of the hot water in the second chamber 17 can be continuously controlled by the temperature sensor 55. The connecting valve 26 is closed and the coffee machine is in this state ready for the preparation of the coffee beverage.

The rod 22 extends through the second chamber 17 and is still partially received in the bore 51 of the bottom flange element 50. Thus, a portion of the rod section 37 still extends into the second chamber 17 and into a corresponding bore 51 of the bottom flange element 50 at least when the piston 16 is in a position closest to the top flange element 40. The rod section 37 can thereby guide the rod 22 and the piston 16 in the cylinder 29 more precisely. In addition, vacuum conditions can be avoided if an air vent 52 is provided which connects the bore 51 with the environment. The second chamber 17 is sealed from the environment by a sealing element 53, which is provided in the bottom flange element 50 which provides a fluid-tight connection with the rod 22, in particular the rod section 37 which is in contact with the sealing element 53. Due to the presence of the rod section 37 in the second chamber 17, the volume change of the second chamber 17 corresponds to the volume change of the first chamber 12 during the upward or downward movement of the piston 16.

In order to start the preparation of the coffee beverage, the user releases the lever 6 so that the lever moves back from the operation position into the resting position. The piston 16 can move downwardly, thus in the direction towards the bottom end 32 of the hollow space 30. As the spring element 25 can expand, its potential energy can be released and exert a pressure upon the piston 16. The pressure in the water line helps to push the piston 16 towards the bottom end 32 as well as the force contained in the spring element 25 which is released. The piston 16 moves towards the bottom flange element 50. The hot water present in the second chamber 17 is pressurized as the connecting valve 26 remains closed. At the same time the fluid pressure in the first chamber 12 is reduced. The inlet valve 7 (see Fig. 11) can open and cold water can be supplied to the first chamber 12 again.

If the pressure of the water in the second chamber 17 has reached the desired value, the control valve 28 (see Fig. 8) can be opened either by manual operation or automatically and the pressurized hot water can enter the recipient 67 containing the ground coffee 27, pass through the ground coffee 27 and through the sieve 66 to be dispensed through the spout 69 into a cup or other suitable beverage container for receiving the hot coffee beverage.

A pressure gauge can be provided for showing or monitoring the pressure of the hot pressurized water passing through the ground coffee 27.

According to an embodiment, the coffee machine 1 comprises a processor unit to calculate desired extraction flow profiles. The extraction flow profiles can be displayed to the user or used to control the fluid flow onto the ground coffee by controlling the opening and closing the control valve 28 (see Fig. 1) by a drive unit. Alternatively or additionally, the control valve can be operated manually. The user can be guided by an indicator, e.g. a display which can indicate one of the desired extraction flow profile or the actual flow profile. In particular the indicator can assist the user to operate the control valve 28 to best match the desired extraction profile with the actual flow profile. Alternatively, the desired extraction flow profile can be compared to the actual flow profile by a comparator which can send a control signal to the drive unit of the control valve to change the flow cross-section of the control valve to automatically adjust the flow in such a way the actual flow profile matches the desired extraction flow profile.

A temperature sensor 55 can be provided to measure the temperature in or close to the cylinder. The temperature sensor 55 can be provided on the top surface of the bottom flange element 50 or in one of the walls of the second chamber 17 or in the water in the second chamber. A controller (not shown) can be provided for controlling the temperature of the cylinder 29 by reading the temperatures of the temperature sensor 55 intermittently or continuously. The controller can be connected to the processor unit to calculate the required energy for the heater 14 and control the heat supply to provide the appropriate energy to the heater 14. The heat supply can be configured as a current supply if the heater 14 is configured as a resistance heater. The heat supply can be configured as a heating fluid supply in case the heater 14 is configured as a fluid-fluid heat exchanger.

The controller can comprise a temperature setting means to set the desired temperature of the cylinder 29. The controller can operate a control element to control the heat supply to the heater 14.

Figure 11 is a partial cross-sectional view of the lever type coffee of one of Fig. 9 or 10 with a water supply line 2. The lever 6 is positioned in resting position. The water inlet is connected to the supply line when no water flows into the first chamber 12. According to this embodiment, any movement of the lever from the resting position to the operation position results in a corresponding movement of the rod 22. The linear gear element 24 is attached to the rod 22 in a fixed position, such that any relative movement of the linear gear element 24 with respect to the rod 22 can be avoided. The rod 22 and the linear gear element 24 can also be machined from a single blank, thus forming a unitary piece, which is not shown in the drawing.

According to the embodiment shown in Fig. 11, the water inlet valve opens if sufficient water pressure is present to lift the valve element from the corresponding valve seat. The valve element is normally positioned on the valve seat by a spring acting on the valve element in a direction opposite to the fluid flow. If sufficient water pressure is present to lift the valve element from the valve seat, the water can flow through a fluid passage to the first chamber 12. According to the embodiment of Fig. 11, the fluid passage is provided in the top flange element 40.

Figure 12 is a partial cross-sectional view of the lever type coffee machine 100 for a setup with a water supply line with the lever in resting position showing an air release valve 13. If the air release valve 13 is open, the air flows out of the first chamber 12 through the air removal line 11 into the water tank or any other water container or is discharged into the environment. If the water supply 2 is connected to a tank or a water line, the air from the first chamber 12 also can be removed through the air removal line 11 to an air release valve 13 as shown in Fig. 12.

According to any one of the preceding embodiments the control valve 28 can be equipped with a measuring device to read the position of the control valve 28 and thereby obtain a position information. The measuring device can include one element from the group consisting of a resistor, a capacitor or an encoder. The position information then can be sent to a processor unit for further processing.

According to any of the preceding embodiments the control valve 28 can be adjusted by an actuator or a drive unit including preferably one of a stepper motor, a DC motor, a servo motor, or a hydraulic actuator. Such an actuator or drive unit can be controlled by a processor unit. In particular, the processor unit can control the operation of the actuator or drive unit to adjust the flow of the hot water from the second chamber 17 to the ground coffee 27.

According to any of the preceding embodiments a flow meter can be inserted into the channel between the second chamber 17 and the ground coffee 27. This flow meter then can send the measured flow data to a processor unit for further processing. As an alternative thereto or in combination with the flow meter, a position measuring device attached to the rod 22, the piston 16 or any other part which is moving together with the rod. A position measuring device may measure the displacement or the position of the piston 16. Alternatively, a position detection element could be placed in the bore 51 of the bottom flange element or in the bore 41 of the top flange element 40. A position detection element in the bore 51 can be configured to measure the distance between the rod end and the bottom of the bore 51 in the bottom flange element. The position detection element can comprise one of an optical, acoustical or electrical transducer configured to detect the distance between the rod end and the bottom of the bore 51. The position detection element can provide position information. The position information can then be sent to a processor unit for further processing. The flow of the water from the second chamber 17 to the recipient 67 containing the ground coffee 27 can be calculated by the change of the volume of the second chamber 17 as a consequence of the displacement of the piston 16.

According to any of the preceding embodiments, a pressure gauge can be installed to display the pressure data of the water just above level of the ground coffee 27 in the recipient 67 to the user. A pressure transducer can be provided to measure the pressure in the recipient 67 or the connecting passage from the second chamber 17 to the recipient 67. Pressure data can be provided by the pressure transducer and transmitted to the processor unit for further processing.

According to any of the preceding embodiments, a temperature sensor 15 can be provided to measure the temperature of the water in the first chamber 12. According to any of the preceding embodiments, a temperature sensor 55 can be provided to measure the temperature of the water in the second chamber 17. Advantageously, the temperature sensor 15, 55 is not placed in the cylinder 29 so as not to interfere with the movement of the piston. An antechamber 45 can be provided upstream of the first chamber 12 (see Fig. 6). The antechamber 45 can have a spiral shape so as to ensure, that the water is supplied contemporaneously to the entire first chamber 12 so as to ensure the highest possible homogeneity of the inlet temperature of the water entering the first chamber 12.

Furthermore, data received from the temperature sensor 15 to measure the temperature of the water in the first chamber 12 or the temperature sensor 55 to measure the temperature of the hot pressurized water in the second chamber 17 or any other temperature sensor can be sent to the processor unit for further processing.

The processor unit can calculate flow and/or pressure and/or temperature profiles for the extraction process and display them to the user and/or use them as a base for a control loop to regulate the measured profiles to the desired profiles. The regulation can be performed manually by the user by operating the control valve 28 or the lever 6 by interpreting the information displayed on a display and/or the processor unit by controlling the actuators and/or heaters 14 to match the resulting profiles as close to the desired profiles as possible. Furthermore, a storage unit can be provided to save any measured data or data generated by the processing unit for further use.

Alternatively or additionally, a flow rate indicator can be provided in a conduit leading from the second chamber to the recipient for the ground coffee 27. Alternatively or additionally, a pressure sensor may be provided to measure a pressure in the second chamber 17 or a conduit leading from the second chamber 17 to the recipient for the ground coffee. The pressure measurement value obtained by the pressure sensor can entered into the processing unit to calculate the flow rate corresponding to the measured pressure. Based on the calculated flow rate, the flow rate to the recipient containing the ground coffee can be adjusted by the control valve 28.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification or the claims refer to at least one of an element or compound selected from the group consisting of A, B, C .... and N, the text should be interpreted as requiring only one element from the group, not A plus N, or B plus N, etc.

## Claims

1. A coffee machine (1) comprising at least a cylinder (29) comprising a hollow space (30), a top flange element (40) and a bottom flange element (50), whereby the hollow space (30) is delimited by the cylinder (29), the top flange element (40) and the bottom flange element (50), a piston (16) movable in the hollow space (30) of the cylinder (29), wherein the piston (16) comprises a first piston surface (33) and a second piston surface (34), whereby the first piston surface (33) is arranged opposite to the second piston surface (34), wherein a first chamber (12) is defined in the hollow space (30) of the cylinder (29) extending from the first piston surface (33) to the top flange element (40) as well as a second chamber (17) is defined in the hollow space (30) of the cylinder (29) extending from the second piston surface (33) to the bottom flange element (50), wherein a spring element (25) is arranged in the first chamber (12) configured to act on the piston (16), wherein a rod (22) is connected to the piston (16) and extends through the first chamber (12) to the top flange element (40), wherein the top flange element (40) includes a bore (41) for guiding the rod (22), wherein the rod (22) is movable together with the piston (16) by the operation of a lever (6) configured to move the rod (22) and the piston (16) relative to the cylinder (29), wherein the cylinder (29) comprises a cylinder jacket (39) **characterized in that** a heater (14) to heat the cylinder (29) and any fluid present in the hollow space (30) is arranged at or in proximity to the cylinder jacket (39).

2. The coffee machine (1) of claim 1, wherein the piston (16) comprises a valve (26) such that the first chamber (12) is fluidly connectable to the second chamber (17) such that a fluid can flow from the first chamber (12) to the second chamber (17) when the valve (26) is in the open state.

3. The coffee machine (1) of one of the preceding claims, wherein upon displacement of the piston (16), the change of volume of the first chamber (12) equals the change of volume of the second chamber (17).

4. The coffee machine (1) of one of the preceding claims wherein the heater (14) comprises a circumferential heating surface connected to one of an inner or an outer wall of the cylinder jacket (39).

5. The coffee machine (1) of claim 4, wherein the circumferential heating surface comprises one of an electrical resistance or is configured to be exposed to a heating fluid.

6. The coffee machine (1) of one of the preceding claims, comprising an inlet valve (3) arranged in the cylinder (29) or the top flange element (40) for providing a fluid flow into the first chamber (12).

7. The coffee machine (1) of claim 6, wherein the inlet valve (3) is a non-return valve.

8. The coffee machine (1) of one of claims 6 or 7, wherein the inlet valve (3) is configured to be actuated by the lever (6).

9. The coffee machine (1) of any one of the preceding claims, further comprising an air removal valve (8) or an air release valve (13).

10. The coffee machine (1) of claim 9, wherein the air removal valve (8) is configured to be actuated by the lever (6).

11. The coffee machine (1) of one of the preceding claims, further comprising a control valve (28) to control the flow of fluid from the second chamber (17) to the ground coffee (27), wherein the control valve (28) can be configured as one of a manually, an electrically or hydraulically actuated control valve.

12. The coffee machine (1) of one of the preceding claims, wherein the rod (22) comprises a rod section (37) extending into the second chamber (17) and into a corresponding bore (51) of the bottom flange element (50) at least when the piston is in a position closest to the bottom flange element (50).

13. The coffee machine (1) of one of the preceding claims, further comprising a position detection element (38) for detecting the position of the rod (22) or of the control valve (28), wherein the position detection element (38) can be connected to the rod (22), the cylinder (29) or the control valve (28) or any bore (41, 51) configured to receive the rod.

14. The coffee machine (1) of one of the preceding claims, further comprising a processor unit to calculate desired extraction flow profiles to be displayed to the user or used to control the fluid flow to a ground coffee (27).

15. The coffee machine (1) of one of the preceding claims, further comprising a pressurized water supply (2).
